Europäisches Patentamt

(19) European Patent Office

Office européen des brevets

(11) Publication number: **0 051 964**
A2

(12) # EUROPEAN PATENT APPLICATION

(21) Application number: **81305153.9**

(22) Date of filing: **29.10.81**

(51) Int. Cl.³: **A 23 K 1/175,** A 23 K 1/16, C 05 G 3/00

(30) Priority: **03.11.80 GB 8035228**
**23.12.80 GB 8041287**
**22.01.81 GB 8101887**

(43) Date of publication of application: **19.05.82**
**Bulletin 82/20**

(84) Designated Contracting States: **AT BE CH DE FR GB IT LI LU NL SE**

(71) Applicant: **Naylor, Graham John, Lulgate Lucklawhill, Balmullo St. Andrews KY16 0BQ Fife (GB)**
Applicant: **Naylor, Pamela Hilda, Lulgate Lucklawhill, Balmullo St. Andrews KY16 0BQ Fife (GB)**

(72) Inventor: **Naylor, Graham John, Lulgate, Lucklawhill, Balmullo St. Andrews KY16 0BQ Fife (GB)**

(74) Representative: **Szczuka, Jan Tymoteusz et al, Cruikshank & Fairweather 19 Royal Exchange Square, Glasgow G1 3AE Scotland (GB)**

(54) **Animal growth control.**

(57) This invention relates to a method of improving food conversion efficiency in a non-human animal comprising administering to said animal a food-conversion improving effective amount of vanadium and/or another NaKATPase enzyme inhibitor and to an animal feedstuff for use in such a method, which feedstuff contains at least 1 p.p.m. of vanadium.

EP 0 051 964 A2

## ANIMAL GROWTH CONTROL

This invention relates to animal growth control and in particular to a method of increasing food conversion efficiency and hence growth-rate for a given food intake, in non-human animals.

The conversion of food into animal meat is a process of somewhat limited efficiency and it is an object of the present invention to provide a method of improving the conversion efficiency.

It has been previously recognized that certain elements known as trace elements including for example vanadium are essential in the diet of animals at certain minimum albeit very low concentrations in order to avoid deficiency induced conditions analogous to vitamin deficiency conditions such as for example scurvy, even though at higher concentrations such elements are actually toxic.

It has now been found that certain levels of certain substances which have NaKATPase enzyme inhibition activity can safely produce improvements in food conversion efficiency in certain animals.

The present invention provides a method of improving food conversion efficiency in a non-human animal selected from avian, ovine, bovine and porcine species and deer and goats, said method comprising administering to said animal a food-conversion improving effective amount of an NaKATPase enzyme inhibitor or a physiologically acceptable bioprecursor therefor.

By means of the present invention it is possible to significantly increase food conversion efficiency in animals so that, for example, a given growth rate can be maintained in an animal on a reduced food intake or an increased growth rate obtained for a given food intake.

-2-

Whilst not wishing to restrict ourselves in any way by the following explanation, it is believed that the mechanism by which the present invention operates is by means of reduction of the energy used in an animal, possibly by as much as 10 to 20%.

Specific substances having an NaKATPase inhibitor activity, which may be mentioned include vanadium (including compounds containing vanadium in non-elemental form); Glycosides including: Digitoxin, Gitoxin, Gitalin, Digoxin, Lanatoside C, Ouabain (g-strophanthin), and Actodigin; Aglycones including: Digitoxigenin, Gitoxigenin, Gitaligenin, and Digoxigenin; Frusemide; Ethacrynic acid; Vanadate ion; Oligomycin; Phenothiazines e.g. chlorpromazine; Thiozanthines e.g. chlorprothixene; Azasteroids e.g. quindonium; Erythrophleum alkaloids e.g. (erythrophleine and cassaine); Mercurial Diuretics - e.g. mersalyl, and mercuric chloride; including various forms thereof and in particular physiologically acceptable bioprecursors thereof which are converted thereto in the animal body.

In certain circumstances where for example the animal is obtaining all or most of its food intake by grazing or from un-processed or minimally processed vegetable matter, it is relatively inconvenient and uneconomic to administer the inhibitor directly, either separately or as a food additive. In such cases the inhibitor is desirably incorporated into the vegetable matter by growing crops providing said vegetable matter in a medium containing an elevated level of the inhibitor in a form absorbable by said crops, the inhibitor being applied for example to the soil in which the crops are grown or sprayed onto the crops. Accordingly it should be understood that the present invention extends to the administration of the inhibitor by such a route also where the inhibitor can be presented in a plant absorbable form.

In particular the inhibitor may be administered in animal fodder crops such as grass, lucerne, alfalfa, clover, barley, turnips, swedes and kale.

Further aspects of the invention will be illustrated with reference to the use of vanadium (in various forms thereof) in increasing the food conversion efficiency of the above-mentioned animals though it should be understood that the same principles relating to the method of use thereof apply also to the other NaKATPase enzyme inhibitors though naturally the specific concentrations by weight and dosage rates will vary according to the molecular weight and specific inhibition activity of the substances concerned.

The vanadium may be administered in various forms depending on factors such as the administration route, type of animal concerned etc. Thus the vanadium may be administered in elemental form, as an ion or complex, an organometallic compound, or any other convenient pharmaceutically acceptable form. Desirably though it is administered in the form of the vanadate ion (i.e. a substance containing the vanadate ion) or a pharmaceutically acceptable bio-precursor of the vanadate ion such as for example metallic vanadium, or an orthovanadate or meta vanadate ion containing, substance. For the sake of convenience and brevity it is to be understood that, unless the contrary is specifically indicated, any references herein to vanadium include the various forms referred to above.

The vanadium may be administered by any suitable route including oral and parenteral administration. Conveniently the vanadium is included in intimate admixture with a pharmaceutically acceptable carrier therefor and/or with a feedstuff. In the latter case the vanadium is conveniently provided in the feedstuff at a concentration of the order of from 1 to 100 p.p.m. (parts per million by weight), preferably from 5 to 30 p.p.m., for example 20 p.p.m. As an alternative the vanadium could be incorporated in an implant which is inserted in a suitable part of the animals anatomy, such as the ear in the case of a pig, for controlled release over an extended period of time e.g. 70 to 90 days, of the vanadium at the desired daily dosage rate.

The rate of administration of the vanadium may be varied within wide limits according to various factors such as the particular form of the vanadium used and its absorption rate, the administration route, the animal's metabolic characteristics, the desired growth rate etc., but is conveniently from 0.01 to 5 mg, preferably from 0.1 to 1 mg, for example 0.5 mg, of elemental vanadium or equivalent amounts of other materials containing said amounts of vanadium in chemically combined form, per kg. bodyweight of the animal per day. In the case of an implant the rate of release and the form of the vanadium are selected to provide equivalent levels of administration. Regarding the abovementioned variation of optimum dosage rate it may be noted that avian species (including chickens, ducks, geese and turkeys) in particular have different metabolisms and excretory systems from the other, mammalian, species to which the present invention is applicable. Thus somewhat different dosage rates are required for avian species. In general the administration rate is around 10 times lower than the above general dosage rates. With reference to absorption rate it may be noted that certain forms such as for example vanadium pentoxide are significantly less readily absorbed than is the vanadate ion form and accordingly somewhat higher dosage levels are required.

Suitable carriers for the vanadium in a feedstuff additive of the invention may be, for example, sugar cane or glucose. Any conventional animal feedstuff may be employed in accordance with the present invention for addition thereto of vanadium, the feedstuff being of course appropriate to the age, species etc. of the animals to which it is being fed.

Suitable plant absorbable forms of the vanadium include sodium ortho-vanadate, potassium ortho-vanadate, ammonium meta-vanadate and potassium meta-vanadate.

Other forms of the vanadium which could be used, which forms are converted on contact with water and/or media such as soil include potassium urano-vanadate (carnotype), vanadium sulphide (patronite); and soot from burning oil.

Other suitable media include other conventional media use for growing crops including various media used in hydroponic and other forms of cultivation.

Preferably the vanadium is administered to the medium at a concentration sufficient to produce a vanadium content in the crops under normal growing density and rate of growth conditions of at least 0.5 p.p.m., preferably at least 1 p.p.m., w/w in the crop ready for harvesting or consumption, where this occurs in situ. Clearly if higher than average planting or sowing densities are employed, the amount of vanadium applied will also have to be increased. Variations in the rate of application may also be required to compensate for different rates of absorption amongst different crops. In addition, where more than one application of vanadium to the medium is made, the amounts at each application may be considerably lower than where only a single application is made.

In general the vanadium is preferably applied at a rate of at least 0.2g per square metre. Preferably the vanadium is applied at a rate of from 1.0g to 5.0g per square metre in the case of crops grown at normal densities in soil using conventional growing techniques.

0051964

-6-

Conveniently the vanadium is applied in any conventional manner for the application of crop growth promoting or controlling materials and indeed may be conveniently administered together with such materials e.g. together with fertiliser. Thus conveniently the vanadium may be applied by spraying or dusting, aerial or ground based, or by drilling.

In a further aspect the invention provides crops, especially animal fodder, when grown by a method of the present invention.

In addition the invention provides a method of improving animal food conversion efficiency by feeding said animals with crops grown by a method according to the present invention.

The invention also provides a fertiliser containing a predetermined quantity of plant nutrient for application at a predetermined rate to a medium for growing a predetermined quantity of crops in, which fertiliser also contains an amount of vanadium sufficient for producing a food conversion improving effective amount of vanadium in said crops. Preferably the fertiliser contains an amount of vanadium such that the vanadium is administered to the medium at a rate of at least 0.2g per square metre, preferably from 1.0g to 5.0g per square metre.

It will be appreciated that by means of the present invention it is possible to also readily improve the food conversion efficiency of animals raised in the field even when these feed directly from the fodder crops grown thereat. Thus it is not necessary to administer special additives to the animal and since the vanadium can readily be incorporated, if desired, with fertiliser or other materials already applied, the benefits of increased food conversion efficiency provided by the present invention can be obtained with the minimum additional effort or cost.

-7-

This invention will now be illustrated with reference to the following Examples.

Example 1 - Feedstuff Additive

9g of sodium orthovanadate ($Na_3VO_4$) was intimately admixed with 1 Kg of sucrose to produce 1.009 Kg of a feedstuff additive.

Examples 2 - 4

The procedure of Example 1 was followed but using instead 6g of sodium metavanadate ($NaVO_3$), 11.5g of potassium orthovanadate ($K_3VO_4$), and 6.75g of potassium metavanadate ($KVO_3$) respectively.

Example 5 - Animal Feedstuff

100g of the feedstuff additive of Example 1 was added to 25kg of barley and intimately admixed therewith to produce 25.1kg of animal feedstuff.

Examples 6 - 8

The procedure of Example 5 was followed using the additives of Examples 2 to 4 respectively.

Example 9 - Animal Treatment

20 pigs, aged 7 weeks and weighing approximately 30kg each were fed for 6 weeks on an appropriate commercial pig feedstuff (e.g. one having a composition of 75% carbohydrate, 16% protein, 3% oil, 5.5% fibre, 0.5% vitamins, the percentages being by weight), to each 25kg bag of which was added 700mg sodium metavanadate. They gained an average of 19.5kg body weight. Each pig consumed approximately 60kg of feedstuff during this period. 20 similar pigs, fed the same food, in the same quantity, but with no added sodium metavanadate, gained an average of only 17.3kg body weight over the same period.

Examples 10 - 12

The procedure of Example 9 was followed using instead the feedstuffs of Examples 6 to 8 respectively.

Example 13 - Crop Growth

Sodium ortho-vanadate (20kg) was drilled into soil (2000 square metres) 7 days prior to sowing of grass seed (3.3g per square metre). The grass was then allowed to grow in the normal way and the vanadium content thereof assayed at intervals.

Results

| Period of growth | Vanadium content w/w |
| --- | --- |
| 2 months | 1.0 ppm |
| 3 months | 1.0 ppm |
| 6 months | 1.1 ppm |

Example 14 - Fertiliser and Preparation thereof, and Use

7kg of vanadium sulphide (patronite) was intimately admixed with 100kg of ammonium sulphate fertiliser. The mixture was then broadcast over permanent pasture at a rate of 450kg per hectare.

Results

3 months after spreading of the fertilizer mixture, the vanadium content of the grass was assayed and found to be 1.2p.p.m. w/w.

Example 15 - Feeding Animals

2 bullocks* were grazed on the grass grown by the method of Example 1 starting after 3 months growth for a period of 2 months and their weight gain recorded. (*Hereford-Friesian cross)

Results

| Animal | Weight gain |
| --- | --- |
| Bullock 1 | 56kg |
| Bullock 2 | 53kg |

## CLAIMS

1.   A method of improving food conversion efficiency in a non-human animal selected from avian, ovine, bovine and porcine species and deer and goats, said method comprising administering to said animal a food-conversion improving effective amount of an NaKATPase enzyme inhibitor or a physiologically acceptable bioprecursor therefor.

2.   A method as claimed in Claim 1 wherein is administered an NaKATPase enzyme inhibitor selected from a glycoside, an aglycone, frusemide, ethacrynic acid, oligomycin, a phenothiazine, an azasteroid, an erythrophleum alkaloid, and a mercurial diuretic.

3.   A method as claimed in Claim 1 wherein is administered the NaKATPase enzyme inhibitor vanadium or a compound containing vanadium in non-elemental form.

4.   A method as claimed in Claim 3 wherein is administered vanadium in a form selected from:  vanadium in elemental form, vanadium in the form of a substance containing a physiologically acceptable ion or complex or organometallic compound of vanadium, and a physiologically acceptable bioprecursor therefor.

5.   A method as claimed in Claim 4 wherein is administered vanadium in the form of the vanadate ion or a physiologically acceptable bioprecursor therefor.

6.   A method as claimed in Claim 4 or Claim 5 wherein is administered orally an amount of vanadium from 0.01 to 5mg per kg bodyweight per day.

7.   A method as claimed in any one of Claims 4 to 6 wherein the vanadium is administered orally in intimate admixture with an animal feedstuff at a concentration of from 1 to 100 p.p.m. in the feedstuff.

8.    A method as claimed in any one of Claims 4 to 6
wherein the vanadium is administered in the form of a
fodder crop containing an elevated level of vanadium.

9.    An animal feedstuff wherein is included at least
1 p.p.m. of vanadium in elemental or non-elemental form.

10.    A method of producing an animal fodder crop containing an elevated level of an NaKATPase enzyme inhibitor
including the step of growing said crop in a medium containing an elevated level of said inhibitor in a plant-
absorbable form.